# EUROPÄISCHE PATENTSCHRIFT

(11) **EP 4 626 729 B1**
(45) Veröffentlichungstag und Bekanntmachung des Hinweises auf die Patenterteilung: **21.10.2026**
(21) Anmeldenummer: 24700265.2
(22) Anmeldetag: 09.01.2024
(51) Int. Cl.: B60K 1/00, F16H 47/06, F16H 47/08, F16H 1/06, F16H 1/20, F16H 1/28

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT POUR UN VÉHICULE À MOTEUR

(30) Priorität: 16.01.2023 DE 102023200288
(43) Veröffentlichungstag der Anmeldung: 08.10.2025
(73) Patentinhaber: Audi AG, 85057 Ingolstadt (DE)
(72) Erfinder: MEIXNER, Christian, 85049 Ingolstadt (DE)
(74) Vertreter: Gleiss Große Schrell und Partner mbB
(86) Internationale Anmeldenummer: PCT/EP2024/050394
(87) Internationale Veröffentlichungsnummer: WO 2024/153497

(56) Entgegenhaltungen:
- DE-A1- 102018 127 701
- DE-A1- 102019 103 242
- DE-A1- 102019 103 711
- DE-A1- 102020 114 063
- JP-A- 2011 231 857
- US-A1- 2020 325 972
- US-B2- 11 535 094

## Beschreibung

Die Erfindung betrifft eine Antriebseinrichtung für ein Kraftfahrzeug, mit einer elektrischen Traktionsmaschine, einem Drehmomentwandler, einem Übersetzungsgetriebe und einem Differentialgetriebe, wobei die Traktionsmaschine - in der angegebenen Reihenfolge - über den Drehmomentwandler und das Übersetzungsgetriebe an das Differentialgetriebe antriebstechnisch angeschlossen ist, wobei die Traktionsmaschine über ein Stirnradgetriebe oder getriebefrei an den Drehmomentwandler antriebstechnisch angeschlossen ist, wobei das Übersetzungsgetriebe als Planetenradübersetzungsgetriebe, als einstufiges oder mehrstufiges Stirnradübersetzungsgetriebe oder als Umschlingungsgetriebe ausgeführt ist und ein Sonnenrad, ein Hohlrad sowie wenigstens ein an dem Planetenradträger drehbar gelagertes, mit dem Sonnenrad und dem Hohlrad in Eingriff stehendes Planetenrad aufweist, wobei das Sonnenrad antriebstechnisch seitens des Drehmomentwandlers und der Planetenradträger antriebstechnisch seitens des Differentialgetriebes angeordnet und das Hohlrad festgesetzt ist.

Aus dem Stand der Technik ist beispielsweise die Druckschrift DE 10 2015 215 965 A1 bekannt. Diese beschreibt eine Antriebseinrichtung für ein Kraftfahrzeug mit wenigstens einer elektrischen Traktionsmaschine zum Antreiben des Kraftfahrzeugs, und mit einem von der Traktionsmaschine antreibbaren, hydrodynamischen Drehmomentwandler, wobei ein von der Traktionsmaschine antreibbares Getriebe vorgesehen ist, über welches der Drehmomentwandler antreibbar ist.

Die Druckschrift DE 10 2019 103 242 A1 betrifft eine elektrische Antriebsvorrichtung für ein Kraftfahrzeug, umfassend eine elektrische Antriebsmaschine mit einem Rotor und einem Stator sowie eine koaxial dazu angeordnete Getriebevorrichtung mit einem Planetengetriebe und einem Differentialgetriebe, wobei das Differentialgetriebe mit einer ersten und zweiten Abtriebswelle wirkverbunden ist, wobei ein Drehmomentwandler mit einer Wellendurchführung wirksam zwischen der Antriebsmaschine und der Getriebevorrichtung angeordnet ist, wobei eine der beiden Abtriebswellen axial durch die Wellendurchführung und die elektrische Antriebsmaschine geführt ist.

Aus dem Stand der Technik sind weiterhin die Druckschriften US 11 535 094 B2, DE 10 2019 103711 A1, JP 2011 231857 A, US 2020/325972 A1, DE 10 2018 127701 A1 und DE 10 2020 114063 A1 bekannt.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere flexibel betreibbar und mit geringem Bauraum realisierbar ist.

Dies wird erfindungsgemäß mit einer Antriebseinrichtung für ein Kraftfahrzeug mit den Merkmalen des Anspruchs 1 erreicht. Dabei ist vorgesehen, dass das Hohlrad über eine in axialer Richtung bezüglich der Drehachse der Traktionsmaschine in Überdeckung mit der Traktionsmaschine angeordnete Hohlradwelle festgesetzt ist.

Vorteilhafte Ausgestaltungen mit zweckmäßigen Weiterbildungen der Erfindung sind in den abhängigen Ansprüchen angegeben.

Die Antriebseinrichtung dient dem Antreiben des Kraftfahrzeugs, insoweit also dem Bereitstellen eines auf das Antreiben des Kraftfahrzeugs gerichteten Antriebsdrehmoments. Zum Bereitstellen des Antriebsdrehmoments weist die Antriebseinrichtung die elektrische Traktionsmaschine auf, mittels welcher das Antriebsdrehmoment zumindest zeitweise oder durchgehend vollständig bereitgestellt wird. Das Kraftfahrzeug liegt bevorzugt als Elektrokraftfahrzeug beziehungsweise elektrisch angetriebenes Kraftfahrzeug vor und verfügt bevorzugt nicht über eine Brennkraftmaschine.

Zusätzlich zu der Traktionsmaschine weist die Antriebseinrichtung den hydrodynamischen Drehmomentwandler, das Übersetzungsgetriebe und das Differentialgetriebe auf. Der hydrodynamische Drehmomentwandler ist antriebstechnisch zwischen der Traktionsmaschine und dem Übersetzungsgetriebe angeordnet, sodass also das Übersetzungsgetriebe über den Drehmomentwandler an die Traktionsmaschine antriebstechnisch angeschlossen ist. Das Differentialgetriebe wiederum ist über das Übersetzungsgetriebe an den Drehmomentwandler angebunden; entsprechend liegt das Übersetzungsgetriebe antriebstechnisch zwischen den Drehmomentwandler und dem Differentialgetriebe vor. Insgesamt ist folglich die Traktionsmaschine über den Drehmomentwandler und das Übersetzungsgetriebe an das Differentialgetriebe antriebstechnisch angebunden, wobei der Drehmomentwandler und das Übersetzungsgetriebe antriebstechnisch in der angegebenen Reihenfolge angeordnet sind.

Unter dem Übersetzungsgetriebe ist ein Getriebe zu verstehen, mit welchem eine von eins verschiedene Übersetzung erzeugt wird. Zwischen einer Übersetzungsgetriebeausgangswelle und einer Übersetzungsgetriebeeingangswelle des Übersetzungsgetriebes liegt insoweit stets - bei einer Drehzahl ungleich null - ein von eins verschiedenes Drehzahlverhältnis vor.

Das Differentialgetriebe liegt vorzugsweise als Achsdifferentialgetriebe vor. Das bedeutet, dass genau eine Radachse des Kraftfahrzeugs über das Differentialgetriebe an die Antriebseinrichtung antriebstechnisch angebunden ist. Die Radachse verfügt über mehrere Teilachsen, welche über das Differentialgetriebe miteinander gekoppelt und jeweils an die Antriebseinrichtung antriebstechnisch angeschlossen sind. Alternativ kann das Differentialgetriebe selbstverständlich als Mittendifferentialgetriebe vorliegen. In diesem Fall sind mehrere Radachsen über das Differentialgetriebe an die Antriebseinrichtung beziehungsweise die Traktionsmaschine antriebstechnisch angeschlossen. Beispielsweise ist jede der mehreren Radachsen jeweils über ein Achsdifferentialgetriebe an das Differentialgetriebe der Antriebseinrichtung angebunden, sodass insgesamt mehrere Differentialgetriebe vorliegen.

Teilweise werden bei Kraftfahrzeugen hohe Anforderungen an das Antriebsdrehmoment gestellt beziehungsweise ein sehr hohes Antriebsdrehmoment verlangt. Dies ist insbesondere bei einem geländegängigen Kraftfahrzeug der Fall. Es könnte vorgesehen sein, die Traktionsmaschine entsprechend auszulegen und ein entsprechendes Nenndrehmoment vorzusehen. Dies führt jedoch zu einer großformatigen Traktionsmaschine und entsprechend zu einem hohen Bauraumbedarf der Antriebseinrichtung. Gleiches gilt für das Vorsehen mehrerer antriebstechnisch aneinander angebundener Traktionsmaschinen, wobei die mehreren Traktionsmaschine zum Antreiben derselben Radachse des Kraftfahrzeugs dienen. Auch ein schaltbares Getriebe beziehungsweise ein Gangwechselgetriebe kann vorgesehen sein, um die Anforderungen hinsichtlich des hohen Antriebsdrehmoments umzusetzen. In jedem Fall führt dies jedoch zu einer hohen Komplexität der Antriebseinrichtung und einem großen Bauraumbedarf.

Aus diesem Grund verfügt die Antriebseinrichtung über den Drehmomentwandler. Mit diesem wird zumindest zeitweise eine Drehmomentüberhöhung erzielt, sodass an der Radachse des Kraftfahrzeugs ein Antriebsdrehmoment bereitgestellt wird, welches größer ist als ein bei der momentanen Drehzahl der Radachse und ohne Drehmomentwandler mit der Antriebseinrichtung gekoppelter Radachse erzielt werden könnte. Mithilfe des Drehmomentwandlers wird somit zum einen zumindest zeitweise ein sehr hohes Antriebsdrehmoment bereitgestellt, zum anderen ist für eine niedrige Fahrgeschwindigkeit des Kraftfahrzeugs ein besonders feinfühliges Fahren möglich. Dies ist beispielsweise beim Anfahren im Gelände und bei einem Überfahren von Hindernissen durch das Kraftfahrzeug von Bedeutung. Grundsätzlich kann die Drehzahl der Radachse feinfühliger eingestellt werden. Zudem ist eine Überlast-Entkopplung zwischen Traktionsmaschine und der Radachse realisiert oder zumindest realisierbar.

Bekannt ist es beispielsweise, die Traktionsmaschine über ein Planetenradgetriebe an den Drehmomentwandler anzubinden. Dies führt jedoch zu einem vergleichsweise großen Bauraum, zumal mit einem solchen Planetenradgetriebe die Traktionsmaschine stets koaxial verbaut werden muss und sich keine anderen Optionen für die Anordnung der Traktionsmaschine bieten. Aus diesem Grund soll erfindungsgemäß die Traktionsmaschine über das Stirnradgetriebe oder getriebefrei an den Drehmomentwandler angebunden sein. Das Stirnradgetriebe zeichnet sich durch Zahnräder auf parallelen Wellen aus, die Zahnräder weisen also parallel voneinander beabstandete Drehachsen auf. Hierdurch unterscheidet es sich von dem Planetenradgetriebe, bei welchem ein Sonnenrad, ein Planetenradträger sowie ein Hohlrad koaxial zueinander angeordnet sind.

Alternativ ist die Traktionsmaschine getriebefrei an den Drehmomentwandler angebunden, also ohne Zwischenschaltung eines Getriebes. Das bedeutet, dass eine Antriebswelle der Traktionsmaschine derart mit einer Eingangswelle des Drehmomentwandlers gekoppelt ist, dass sie stets die gleiche Drehzahl aufweisen. Die beschriebene Ausgestaltung der Antriebseinrichtung ermöglicht zum einen das bereits erwähnte flexible Betreiben und ist zum anderen äußerst kompakt aufgebaut und flexibel in der Anordnung der Traktionsmaschine.

Die Erfindung sieht vor, dass das Übersetzungsgetriebe als Planetenradübersetzungsgetriebe ausgeführt ist. In anderen Worten liegt das Übersetzungsgetriebe als Planetenradgetriebevor. Das Planetenradübersetzungsgetriebe verfügt über ein Sonnenrad, ein Hohlrad und einen Planetenradträger, wobei an letzteren wenigstens ein Planetenrad drehbar gelagert ist. Das wenigstens eine Planetenrad steht sowohl mit dem Sonnenrad als auch mit dem Hohlrad in Eingriff, kämmt also mit diesen. Vorzugsweise sind selbstverständlich an dem Planetenradträger mehrere Planetenräder drehbar gelagert, wobei jedes der Planetenräder sowohl mit dem Sonnenrad also mit dem Hohlrad kämmt. Mit dem Planetenradübersetzungsgetriebe kann ein besonders hohes Übersetzungsverhältnis erzielt werden.

Alternativ und nicht erfindungsgemäß ist das Übersetzungsgetriebe als einstufiges oder mehrstufiges Stirnradübersetzungsgetriebe ausgestaltet. Das bedeutet, dass es in der ersten Variante zwei Zahnräder und in der zweiten Variante wenigstens drei Zahnräder aufweist, wobei ein Eingangszahnrad ausschließlich über wenigstens ein Zwischenzahnrad mit einem Ausgangszahnrad antriebstechnisch verbunden ist. Liegen mehrere Zwischenzahnräder vor, so sind diese antriebstechnisch in Reihe geschaltet. In einer weiteren nicht erfindungsgemäßen Ausgestaltung liegt das Übersetzungsgetriebe als Umschlingungsgetriebe vor, bei welchem das Antriebsdrehmoment unter Verwendung eines Zugmittels übertragen wird. Entsprechend der Ausgestaltung des Übersetzungsgetriebes liegen entweder eine flexible Anordnung und ein geringer Platzbedarf der Antriebseinrichtung oder ein vergleichsweise hohes Übersetzungsverhältnis vor.

Eine Weiterbildung der Erfindung sieht vor, dass der Drehmomentwandler ein antriebstechnisch seitens der Traktionsmaschine vorliegendes Pumpenrad, ein antriebstechnisch seitens des Differentialgetriebes vorliegendes Turbinenrad und ein Leitrad aufweist, wobei das Leitrad auf einer Leitradwelle angeordnet ist. Eine solche Ausgestaltung des Drehmomentwandlers ist grundsätzlich bekannt. Das Pumpenrad ist antriebstechnisch an die Traktionsmaschine angebunden, entweder über das Stirnradgetriebe oder getriebefrei. Das Turbinenrad ist hingegen antriebstechnisch mit dem Differentialgetriebe gekoppelt und ausschließlich über das Pumpenrad an die Traktionsmaschine angebunden.

Das Pumpenrad dient dazu, ein Fluid in Richtung des Turbinenrads zu pumpen, sodass dieses von dem Fluid angetrieben wird. Über das Fluid sind das Pumpenrad und das Turbinenrad fluidtechnisch beziehungsweise hydrodynamisch miteinander verbunden. Fluidtechnisch zwischen dem Pumpenrad und dem Turbinenrad ist das Leitrad angeordnet, welches das Fluid strömungstechnisch führt. Das Leitrad ist auf der Leitradwelle angeordnet, beispielsweise ist es starr mit dieser verbunden.

Es kann vorgesehen sein, dass das Leitrad mittels eines Freilaufs in einer Drehrichtung drehbar, in einer entgegengesetzten Drehrichtung jedoch festgesetzt ist. Der Drehmomentwandler ist entsprechend als Trilok-Wandler ausgeführt. Der Freilauf liegt beispielsweise zwischen dem Leitrad und der Leitradwelle vor, wobei die Leitradwelle starr angeordnet ist. Es kann jedoch auch vorgesehen sein, dass das Leitrad starr mit der Leitradwelle gekoppelt und die Leitradwelle mittels des Freilauf in lediglich einer Drehrichtung drehbar gelagert ist. Eine solche Ausgestaltung des Drehmomentwandlers ermöglicht eine besonders ausgeprägte Drehmomentüberhöhung.

Eine Weiterbildung der Erfindung sieht vor, dass die Leitradwelle von einer als Hohlwelle ausgestalteten Eingangswelle aufgenommen ist, oder dass die Leitradwelle als Hohlwelle ausgestaltet ist und eine antriebstechnisch zwischen dem Drehmomentwandler und dem Übersetzungsgetriebe vorliegende Ausgangswelle oder eine Differentialgetriebeausgangswelle des Differentialgetriebes aufnimmt. In ersterem Fall ist die Leitradwelle koaxial zu der Eingangswelle angeordnet, in letzterem Fall ist die Leitradwelle koaxial zu der Ausgangswelle oder der Differentialgetriebeausgangswelle angeordnet. Dies ermöglicht eine kompakte Ausgestaltung der Antriebseinrichtung.

Eine Weiterbildung der Erfindung sieht vor, dass die Traktionsmaschine koaxial oder exzentrisch zu der Ausgangswelle angeordnet ist. Die koaxiale Anordnung der Traktionsmaschine liegt insbesondere bei getriebefrei an den Drehmomentwandler angeschlossener Traktionsmaschine vor. Die exzentrische Anordnung wird mithilfe des Stirnradgetriebes erzielt. Wiederum dient dies der Realisierung einer besonders kompakten Antriebseinrichtung.

Eine Weiterbildung der Erfindung sieht vor, dass eine Überbrückungskupplung in axialer Richtung bezüglich einer Drehachse der Traktionsmaschine gesehen zwischen Traktionsmaschine und dem Drehmomentwandler oder auf einer der Traktionsmaschine abgewandten Seite des Drehmomentwandlers angeordnet ist. Unter der Drehachse der Traktionsmaschine ist die Drehachse einer Abtriebswelle oder Maschinenwelle der Traktionsmaschine zu verstehen, welche über das Stirnradgetriebe oder getriebefrei an den Drehmomentwandler angebunden ist. Die beschriebenen Möglichkeiten für die Anordnung der Überbrückungskupplung stellen erneut die platzsparende Ausgestaltung der Antriebseinrichtung sicher.

Eine Weiterbildung der Erfindung sieht vor, dass das Turbinenrad in axialer Richtung bezüglich der Drehachse der Traktionsmaschine gesehen auf der der Traktionsmaschine zugewandten Seite des Pumpenrads angeordnet ist, oder dass das Pumpenrad in axialer Richtung bezüglich der Drehachse der Traktionsmaschine gesehen auf der der Traktionsmaschine zugewandten Seite des Turbinenrads angeordnet ist. Die unterschiedlichen Anordnungen des Turbinenrads beziehungsweise des Pumpenrads dienen erneut einer kompakten Ausgestaltung der Antriebseinrichtung, sodass ein möglichst geringer Bauraumbedarf umgesetzt ist.

Die Erfindung sieht vor, dass das Planetenradübersetzungsgetriebe ein Sonnenrad, ein Hohlrad sowie wenigstens ein an dem Planetenradträger drehbar gelagertes, mit dem Sonnenrad und dem Hohlrad in Eingriff stehendes Planetenrad aufweist, wobei das Sonnenrad antriebstechnisch seitens des Drehmomentwandlers und der Planetenradträger antriebstechnisch seitens des Differentialgetriebes angeordnet und das Hohlrad festgesetzt ist. Hierunter ist zu verstehen, dass das Sonnenrad antriebstechnisch an den Drehmomentwandler angeschlossen ist und der Planetenradträger ausschließlich über das Sonnenrad mit dem Drehmomentwandler gekoppelt ist. Umgekehrt ist der Planetenradträger an das Differentialgetriebe angeschlossen und das Sonnenrad ausschließlich über den Planetenradträger mit dem Differentialgetriebe gekoppelt. Das Hohlrad ist ortsfest angeordnet, beispielsweise ist es an einem Gehäuse des Übersetzungsgetriebes befestigt oder einstückig mit diesem ausgestaltet. Hierdurch wird die kompakte Ausgestaltung der Antriebseinrichtung erzielt.

Die Erfindung sieht vor, dass das Hohlrad über eine in axialer Richtung bezüglich der Drehachse der Traktionsmaschine in Überdeckung mit der Traktionsmaschine angeordnete Hohlradwelle festgesetzt ist. Das Festsetzen des Hohlrads erfolgt mittels der Hohlradwelle, welche mit dem Hohlrad starr verbunden ist. Die Hohlradwelle erstreckt sich ausgehend von dem Hohlrad in axialer Richtung bezüglich der Drehachse der Traktionsmaschine derart weit, dass sie in Überdeckung mit der Traktionsmaschine vorliegt oder diese sogar vollständig übergreift oder durchgreift. Hierdurch ist ein zuverlässiges Festsetzen des Hohlrad umgesetzt.

Eine Weiterbildung der Erfindung sieht vor, dass die Hohlradwelle koaxial zu der Differentialgetriebeausgangswelle und/oder der Leitradwelle angeordnet ist. Die koaxiale Anordnung ermöglicht eine besonders kompakte Ausführung der Antriebseinrichtung.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, soweit hierdurch der von den Ansprüchen definierte Rahmen nicht verlassen wird. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind, sofern diese Ausführungsformen im Rahmen der Ansprüche liegen.

Die Erfindung wird nachfolgend anhand der in der Zeichnung dargestellten Ausgangsbeispiele erläutert. Dabei zeigt:
- Figur 1: eine schematische Darstellung einer Antriebseinrichtung für ein Kraftfahrzeug in einem ersten Ausführungsbeispiel, das nicht unter den Wortlaut des Anspruchs 1 fällt,
- Figur 2: eine schematische Darstellung der Antriebseinrichtung in einem zweiten Ausführungsbeispiel, das nicht unter den Wortlaut des Anspruchs 1 fällt,
- Figur 3: eine schematische Darstellung eines dritten Ausführungsbeispiel der Antriebseinrichtung, das nicht unter den Wortlaut des Anspruchs 1 fällt,
- Figur 4: eine schematische Darstellung der Antriebseinrichtung einem vierten Ausführungsbeispiel, das nicht unter den Wortlaut des Anspruchs 1 fällt,
- Figur 5: die Antriebseinrichtung in schematischer Darstellung einem fünften Ausführungsbeispiel, das nicht unter den Wortlaut des Anspruchs 1 fällt, sowie
- Figur 6: eine Ausführungsform der Antriebseinrichtung in schematischer Darstellung, die unter den Wortlaut des Anspruchs 1 fällt.

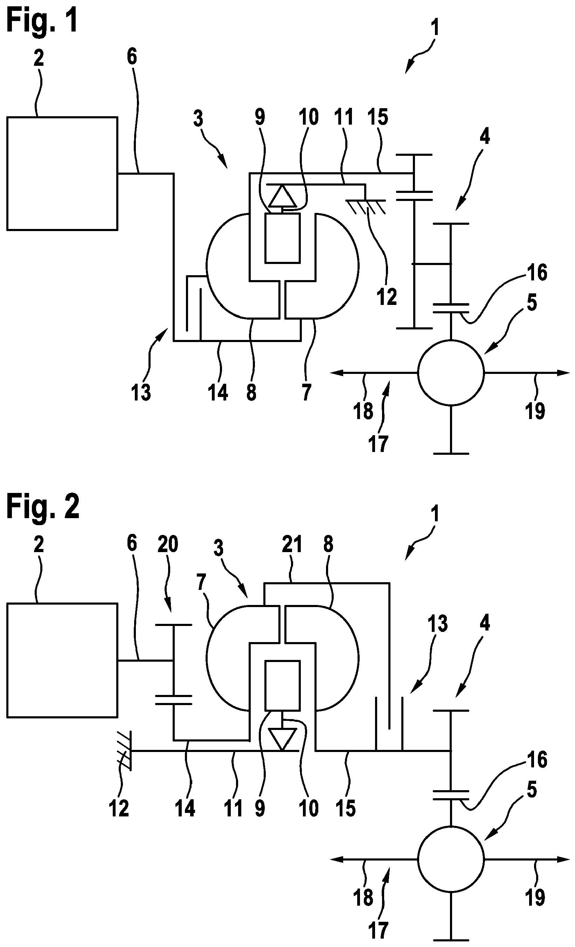

Die Figur 1 zeigt eine schematische Darstellung einer Antriebseinrichtung 1 für ein Kraftfahrzeug in einem ersten Ausführungsbeispiel. Die Antriebseinrichtung 1 verfügt über eine elektrische Traktionsmaschine 2, einen Drehmomentwandler 3, ein Übersetzungsgetriebe 4 sowie ein Differentialgetriebe 5. Die Traktionsmaschine 2 weist eine Antriebswelle 6 auf, die an den Drehmomentwandler 3 antriebstechnisch angeschlossen ist, in dem hier dargestellten Ausführungsbeispiel getriebefrei, also nicht über ein Getriebe. Die Antriebswelle 6 ist mit einem Pumpenrad 7 gekoppelt, vorzugsweise starr und permanent. Zusätzlich zu dem Pumpenrad 7 verfügt der Drehmomentwandler 3 über ein Turbinenrad 8 und ein Leitrad 9. Das Leitrad 9 ist strömungstechnisch zwischen dem Pumpenrad 7 und dem Turbinenrad 8 angeordnet und über einen Freilauf 10 auf einer Leitradwelle 11 drehbar gelagert. Die Leitradwelle 11 ist ortsfest befestigt, beispielsweise an einem hier lediglich angedeuteten Gehäuse 12 der Antriebseinrichtung 1.

Weiterhin verfügt der Drehmomentwandler 3 über eine Überbrückungskupplung 13, mittels welcher das Pumpenrad 7 und das Turbinenrad 8 mechanisch koppelbar sind. In einer ersten Einstellung der Überbrückungskupplung 13 sind also das Pumpenrad 7 und das Turbinenrad 8 antriebstechnisch voneinander entkoppelt, bei einer zweiten Einstellung sind sie hingegen mechanisch aneinander angebunden, bevorzugt starr oder zumindest im Wesentlichen starr, also im Wesentlichen ohne Kupplungsschlupf. Die Anbindung der Antriebswelle 6 an das Pumpenrad 7 erfolgt über eine Eingangswelle 14 des Drehmomentwandlers 3.

Das Turbinenrad 8 ist über eine Ausgangswelle 15 an das Übersetzungsgetriebe 4 angebunden, welches in dem hier dargestellten Ausführungsbeispiel als mehrstufiges Stirnradübersetzungsgetriebe ausgestaltet ist. Über das Übersetzungsgetriebe 4 ist die Ausgangswelle 15 mit dem Differentialgetriebe 5 gekoppelt, nämlich insbesondere mit einem Eingangsrad 16 des Differentialgetriebes 5. Über das Differentialgetriebe 5 ist das Übersetzungsgetriebe 4 mit einer Radachse 17 des Kraftfahrzeugs antriebstechnisch verbunden, welche über zwei Teilachsen 18 und 19 verfügt. Die Teilachsen 18 und 19 können auch als Differentialgetriebeausgangswellen bezeichnet werden.

Es ist erkennbar, dass die Leitradwelle 11 als Hohlwelle ausgestaltet ist und die Ausgangswelle 15 in sich aufnimmt. Zudem ist die Traktionsmaschine 2 aufgrund der getriebefreien Anbindung an den Drehmomentwandler 3 koaxial zu der Ausgangswelle 15 angeordnet. Die Überbrückungskupplung 13 ist in axialer Richtung bezüglich der Drehachse der Traktionsmaschine 2 beziehungsweise der Antriebswelle 6 zwischen der Traktionsmaschine 2 und dem Drehmomentwandler 3 angeordnet, also auf der dem Übersetzungsgetriebe 4 abgewandten Seite des Drehmomentwandlers 3. Das Turbinenrad 8 liegt, wiederum in axialer Richtung gesehen, auf der der Traktionsmaschine 2 zugewandten Seite des Pumpenrads 7 vor. Insgesamt ist somit eine kompakte Ausgestaltung der Antriebseinrichtung 1 erzielt. Das Übersetzungsgetriebe 4 kann im Übrigen alternativ zu der hier gezeigten Ausgestaltung auch als Umschlingungsgetriebe ausgeführt sein.

Die Figur 2 zeigt ein zweites Ausführungsbeispiel der Antriebseinrichtung 1 in schematischer Darstellung. Hinsichtlich der Bezeichnung der einzelnen Elemente und der grundsätzlichen Ausgestaltung wird auf die Ausführungen zu dem ersten Ausführungsbeispielverwiesen und nachfolgend ausschließlich auf die Unterschiede eingegangen. Diese liegen darin, dass die Traktionsmaschine 2 über ein Stirnradgetriebe 20 an den Drehmomentwandler 3 beziehungsweise an das Pumpenrad 7 antriebstechnisch angebunden ist. Hierdurch wird eine exzentrische Anordnung der Traktionsmaschine 2 bezüglich der Ausgangswelle 15 erreicht.

Die Eingangswelle 14 beziehungsweise das Pumpenrad 7 ist über eine Koppelwelle 21 an die Überbrückungskupplung 13 angebunden. Diese Koppelwelle 21 übergreift in axialer Richtung das Turbinenrad 8, sodass folglich das Pumpenrad 7 einerseits und die Überbrückungskupplung 13 andererseits des Turbinenrads 8 vorliegen beziehungsweise dieses zwischen sich aufnehmen. Das Übersetzungsgetriebe 4 liegt hier als einstufiges Stirnradübersetzungsgetriebe vor. Die Leitradwelle 11 ist koaxial zu der Ausgangswelle 15 angeordnet und wird von der als Hohlwelle ausgestalteten Eingangswelle 14 bereichsweise aufgenommen. Die Leitradwelle 11 erstreckt sich ausgehend von dem Leitrad 9 beziehungsweise dem Freilauf 10 in axialer Richtung in Richtung der Traktionsmaschine 2, insbesondere ist sie auf der dem Leitrad 9 abgewandten Seite des Stirnradgetriebe 20 an das Gehäuse 12 angebunden. Die Überbrückungskupplung 13 ist in axialer Richtung auf der der Traktionsmaschine 2 abgewandten Seite des Drehmomentwandlers 3 angeordnet. Das Turbinenrad 8 liegt in axialer Richtung gesehen auf der der Traktionsmaschine 2 abgewandten Seite des Pumpenrad 7 vor.

Alternativ zu der gezeigten Darstellung kann die Traktionsmaschine 2 auch auf der gegenüberliegenden Seite angeordnet sein, sodass also das Stirnradgetriebe 20 über die Koppelwelle 21 an das Pumpenrad 7 angebunden ist. Auch kann selbstverständlich das Übersetzungsgetriebe 4 anstelle des Stirnradübersetzungsgetriebes als Umschlingungsgetriebe vorliegen.

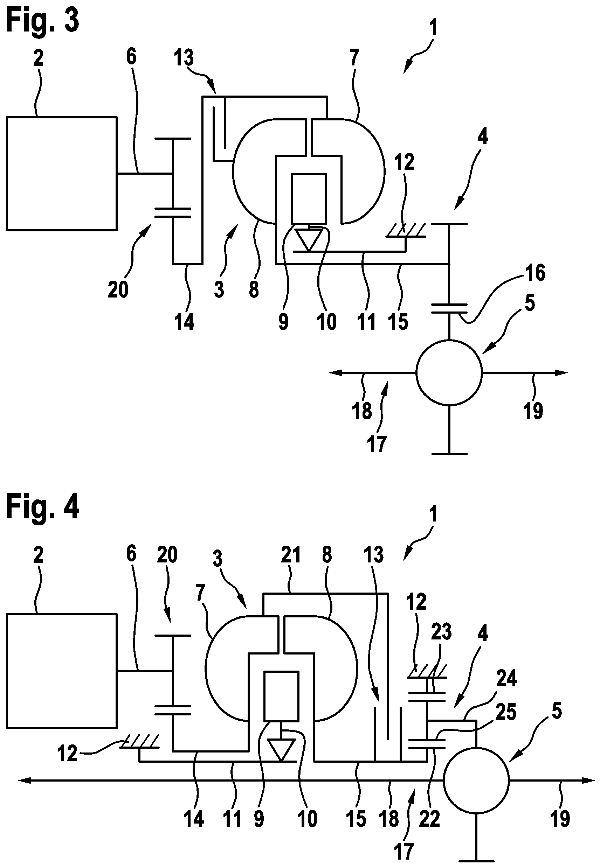

Die Figur 3 zeigt ein drittes Ausführungsbeispiel der Antriebseinrichtung 1, wiederum in schematischer Form. Erneut wird auf die vorstehenden Ausführungen verwiesen und lediglich auf die Unterschiede eingegangen. Bei dem dritten Ausführungsbeispiel ist die Traktionsmaschine 2 über das Stirnradgetriebe 20 an den Drehmomentwandler 3 angebunden. Auch ist das Übersetzungsgetriebe 4 als einstufiges Stirnradübersetzungsgetriebe ausgeführt. Der Unterschied zu dem zweiten Ausführungsbeispielliegt insbesondere in der gespiegelten Anordnung von Pumpenrad 7 und Turbinenrad 8 sowie der sich hieraus ergebenden Anordnung der Leitradwelle 11. Diese ist koaxial zu der Ausgangswelle 15 angeordnet und als die Ausgangswelle 15 aufnehmende Hohlwelle ausgestaltet. Alternativ zu dem gezeigten Ausführungsbeispielkann die Traktionsmaschine 2 auf der anderen Seite des Drehmomentwandlers 3 angeordnet sein, also auf der dem Turbinenrad 8 gegenüberliegenden Seite des Pumpenrads 7. Zudem kann das Übersetzungsgetriebe 4 statt als Stirnradübersetzungsgetriebe als Umschlingungsgetriebe ausgeführt sein.

Die Figur 4 zeigt eine schematische Darstellung eines vierten Ausführungsbeispiels der Antriebseinrichtung 1. Es wird Bezug genommen auf die vorstehenden Ausführungen, insbesondere zu dem zweiten Ausführungsbeispiel, und lediglich auf die Unterschiede eingegangen. Diese liegen darin, dass das Übersetzungsgetriebe 4 nicht als Stirnradübersetzungsgetriebe, sondern als Planetenradübersetzungsgetriebe ausgestaltet ist. Entsprechend verfügt es über ein Sonnenrad 22, ein Hohlrad 23 sowie einen Planetenradträger 24, an welchem ein Planetenrad 25 drehbar gelagert ist. Das Planetenrad 25 kämmt sowohl mit dem Sonnenrad 22 als auch mit dem Hohlrad 23. Der Planetenradträger 24 ist an das Differentialgetriebe 5 angebunden, insbesondere ersetzt der Planetenradträger 24 das Eingangsrad 16. Das Hohlrad 23 ist ortsfest angeordnet und hierzu vorzugsweise mit dem Gehäuse 12 verbunden.

Die Leitradwelle 11 ist als Hohlwelle ausgestaltet und nimmt eine der Teilachsen 18 und 19, hier beispielsweise die Teilachse 18, in sich auf. Entsprechend umgreift auch die Eingangswelle 14 die Teilachse 18. Dasselbe gilt für die Ausgangswelle 15, welche ebenfalls als Hohlwelle vorliegt und die die Teilachse 18 umgreift. In Abwandlung der dargestellten Ausgestaltung kann die Traktionsmaschine 2 auf der gegenüberliegenden Seite des Drehmomentwandlers 3 angeordnet sein und entsprechend über die Koppelwelle 21 an das Pumpenrad 7 angebunden sein.

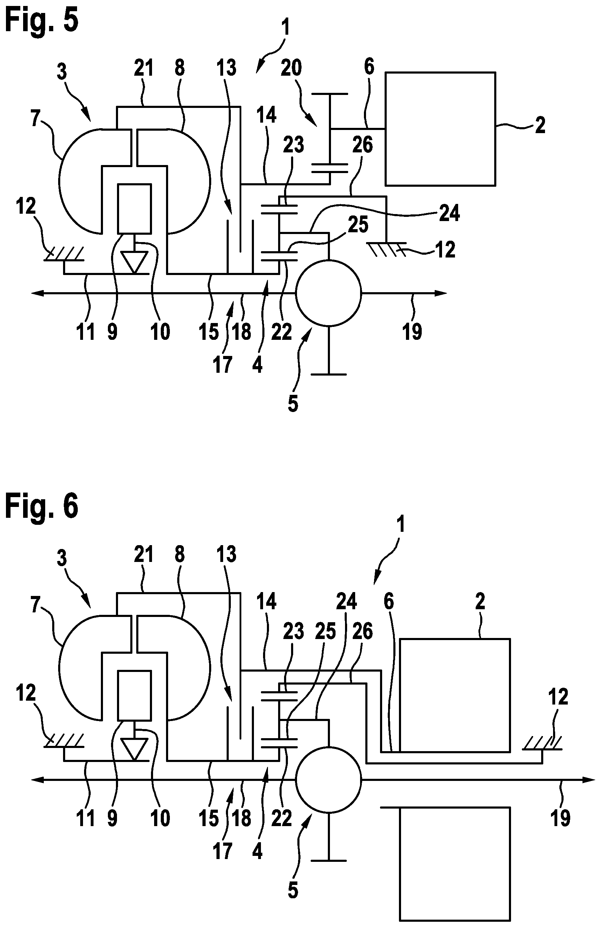

Die Figur 5 zeigt ein fünftes Ausführungsbeispiel der Antriebseinrichtung 1 in schematischer Darstellung. Es wird auf die vorstehenden Ausführungen Bezug genommen, insbesondere auf die Ausführungen zu dem vierten Ausführungsbeispiel, und lediglich auf die Unterschiede hingewiesen. Diese liegen darin, dass die Traktionsmaschine 2 auf der dem Pumpenrad 7 abgewandten Seite des Turbinenrads 8 angeordnet ist und über die das Turbinenrad 8 übergreifende Koppelwelle 21 an das Pumpenrad 7 angebunden ist. Die Eingangswelle 14 ist als Hohlwelle ausgestaltet und umgreift das Übersetzungsgetriebe 4, welches erneut als Planetenradübersetzungsgetriebe vorliegt.

Zur ortsfesten Anordnung des Hohlrads 23 ist es notwendig, dass sich eine mit dem Hohlrad 23 starr verbundenen Hohlradwelle 26 aus der Eingangswelle 14 heraus erstreckt und entsprechend auf der dem Übersetzungsgetriebe 4 gegenüberliegenden Seite des Stirnradgetriebes 20 angeordnet ist. Die Hohlradwelle 26 ist auf ihrer dem Hohlrad 23 abgewandten Seite an dem Gehäuse 12 befestigt. Diese Befestigung erfolgt vorzugsweise in axialer Richtung gesehen in Überdeckung mit der Traktionsmaschine 2. Alternativ zu der beschriebenen Ausgestaltung können das Pumpenrad 7 und das Turbinenrad 8 hinsichtlich ihrer Anordnung vertauscht werden, sodass also das Pumpenrad 7 auf der der Traktionsmaschine 2 zugewandten Seite des Turbinenrads 8 angeordnet ist.

Die Figur 6 zeigt eine schematische Darstellung einer erfindungsgemäßen Ausführungsform der Antriebseinrichtung 1. Es wird Bezug genommen auf die vorhergehenden Ausführungen, insbesondere zu dem fünften Ausführungsbeispiel. Nachfolgend werden lediglich auf die Unterschiede hingewiesen. Diese liegen darin, dass das Stirnradgetriebe 20 entfällt, sodass die Traktionsmaschine 2 getriebefrei an den Drehmomentwandler 3 angebunden ist. Hierbei ist die Traktionsmaschine 2 koaxial zu der Radachse 17, insbesondere der Teilachse 19 angeordnet und umgreift diese. Hierdurch ist es notwendig, die Hohlradwelle 26 zu verlängern, sodass diese die Traktionsmaschine 2 durchgreift und auf der dem Übersetzungsgetriebe 4 abgewandten Seite der Traktionsmaschine 2 an dem Gehäuse 12 befestigt ist.

Alternativ kann die Traktionsmaschine 2 in axialer Richtung zwischen dem Drehmomentwandler 3 und dem Differentialgetriebe 5 angeordnet sein. Auch eine Anordnung der Traktionsmaschine 2 auf der gegenüberliegenden Seite des Drehmomentwandlers 3 kann umgesetzt sein, sodass entsprechend die Traktionsmaschine 2 auf der dem Turbinenrad 8 abgewandten Seite des Pumpenrads 7 vorliegt. Zudem kann in einer weiteren Ausgestaltung in jeder der Teilachsen 18 und 19 ein weiteres Übersetzungsgetriebe vorliegen, welches beispielsweise als Stirnradgetriebe oder als Planetenradgetriebe ausgeführt ist.

### BEZUGSZEICHENLISTE:

- 1: Antriebseinrichtung
- 2: Traktionsmaschine
- 3: Drehmomentwandler
- 4: Übersetzungsgetriebe
- 5: Differentialgetriebe
- 6: Antriebswelle
- 7: Pumpenrad
- 8: Turbinenrad
- 9: Leitrad
- 10: Freilauf
- 11: Leitradwelle
- 12: Gehäuse
- 13: Überbrückungskupplung
- 14: Eingangswelle
- 15: Ausgangswelle
- 16: Eingangsrad
- 17: Radachse
- 18: Teilachse
- 19: Teilachse
- 20: Stirnradgetriebe
- 21: Koppelwelle
- 22: Sonnenrad
- 23: Hohlrad
- 24: Planetenradträger
- 25: Planetenrad
- 26: Hohlradwelle

## Patentansprüche

1. Antriebseinrichtung (1) für ein Kraftfahrzeug, mit einer elektrischen Traktionsmaschine (2), einem Drehmomentwandler (3), einem Übersetzungsgetriebe (4) und einem Differentialgetriebe (5), wobei die Traktionsmaschine (2) - in der angegebenen Reihenfolge - über den Drehmomentwandler (3) und das Übersetzungsgetriebe (4) an das Differentialgetriebe (5) antriebstechnisch angeschlossen ist, wobei die Traktionsmaschine (2) über ein Stirnradgetriebe (20) oder getriebefrei an den Drehmomentwandler (3) antriebstechnisch angeschlossen ist, wobei das Übersetzungsgetriebe (4) als Planetenradübersetzungsgetriebe ausgeführt ist und ein Sonnenrad (22), ein Hohlrad (23) sowie wenigstens ein an einem Planetenradträger (24) drehbar gelagertes, mit dem Sonnenrad (22) und dem Hohlrad (23) in Eingriff stehendes Planetenrad (25) aufweist, wobei das Sonnenrad (22) antriebstechnisch seitens des Drehmomentwandlers (3) und der Planetenradträger (24) antriebstechnisch seitens des Differentialgetriebes (5) angeordnet und das Hohlrad (23) festgesetzt ist, **dadurch gekennzeichnet, dass** das Hohlrad (23) über eine in axialer Richtung bezüglich der Drehachse der Traktionsmaschine (2) in Überdeckung mit der Traktionsmaschine (2) angeordnete Hohlradwelle (26) festgesetzt ist.

2. Antriebseinrichtung nach Anspruch 1, **dadurch gekennzeichnet, dass** der Drehmomentwandler (3) ein antriebstechnisch seitens der Traktionsmaschine (2) vorliegendes Pumpenrad (7), ein antriebstechnisch seitens des Differentialgetriebes (5) vorliegendes Turbinenrad (8) und ein Leitrad (9) aufweist, wobei das Leitrad (9) auf einer Leitradwelle (11) angeordnet ist.

3. Antriebseinrichtung nach einem der vorhergehenden Ansprüche, **dadurch gekennzeichnet, dass** die Leitradwelle (11) von einer als Hohlwelle ausgestalteten Eingangswelle (14) des Drehmomentwandlers (3) aufgenommen ist, oder dass die Leitradwelle (11) als Hohlwelle ausgestaltet ist und eine antriebstechnisch zwischen dem Drehmomentwandler (3) und dem Übersetzungsgetriebe (4) vorliegende Ausgangswelle (15) des Drehmomentwandlers (3) oder eine Differentialgetriebeausgangswelle des Differentialgetriebes (5) aufnimmt.

4. Antriebseinrichtung nach Anspruch 3, **dadurch gekennzeichnet, dass** die Traktionsmaschine (2) koaxial oder exzentrisch zu der Ausgangswelle (15) angeordnet ist.

5. Antriebseinrichtung nach einem der vorhergehenden Ansprüche, **dadurch gekennzeichnet, dass** eine Überbrückungskupplung (13) in axialer Richtung bezüglich einer Drehachse der Traktionsmaschine (2) gesehen zwischen der Traktionsmaschine (2) und dem Drehmomentwandler (3) oder auf einer der Traktionsmaschine (2) abgewandten Seite des Drehmomentwandlers (3) angeordnet ist.

6. Antriebseinrichtung nach Anspruch 2, **dadurch gekennzeichnet, dass** das Turbinenrad (8) in axialer Richtung bezüglich der Drehachse der Traktionsmaschine (2) gesehen auf der der Traktionsmaschine (2) zugewandten Seite des Pumpenrads (7) angeordnet ist, oder dass das Pumpenrad (7) in axialer Richtung bezüglich der Drehachse der Traktionsmaschine (2) gesehen auf der der Traktionsmaschine (2) zugewandten Seite des Turbinenrads (8) angeordnet ist.

7. Antriebseinrichtung nach Anspruch 3, **dadurch gekennzeichnet, dass** die Hohlradwelle (26) koaxial zu der Differentialgetriebeausgangswelle und/oder der Leitradwelle (11) angeordnet ist.

## Claims

1. Drive device (1) for a motor vehicle, having an electric traction machine (2), a torque converter (3), a transmission gearbox (4) and a differential gearbox (5), wherein the traction machine (2) is propulsively connected to the differential gearbox (5) - in the specified order - via the torque converter (3) and the transmission gearbox (4), wherein the traction machine (2) is propulsively connected to the torque converter (3) via a spur gear (20) or gearless, wherein the transmission gearbox (4) is designed as a planetary gear transmission and comprises a sun gear (22), a ring gear (23) and at least one planet gear (25) rotatably mounted on a planet gear carrier (24) and in engagement with the sun gear (22) and the ring gear (23), wherein the sun gear (22) is arranged on the drive side of the torque converter (3) and the planetary gear carrier (24) is arranged on the drive side of the differential gearbox (5) and the ring gear (23) is fixed, **characterised in that** the ring gear (23) is fixed via a ring gear shaft (26) arranged in axial direction with respect to the axis of rotation of the traction machine (2) in overlap with the traction machine (2).

2. Drive device according to claim 1, **characterised in that** the torque converter (3) comprises a pump wheel (7) present on the drive side of the traction machine (2), a turbine wheel (8) present on the drive side of the differential gearbox (5) and a guide wheel (9), wherein the guide wheel (9) is arranged on a guide wheel shaft (11).

3. Drive device according to one of the preceding claims, **characterised in that** the guide wheel shaft (11) is received by an input shaft (14) of the torque converter (3) configured as a hollow shaft, or **in that** the guide wheel shaft (11) is configured as a hollow shaft and receives an output shaft (15) of the torque converter (3) propulsively present between the torque converter (3) and the transmission gearbox (4) or a differential gearbox output shaft of the differential gearbox (5).

4. Drive device according to claim 3, **characterised in that** the traction machine (2) is arranged coaxially or eccentrically to the output shaft (15).

5. Drive device according to one of the preceding claims, **characterised in that** a locking clutch (13) is arranged between the traction machine (2) and the torque converter (3) or on a side of the torque converter (3) facing away from the traction machine (2), as viewed in the axial direction with respect to an axis of rotation of the traction machine (2).

6. Drive device according to claim 2, **characterised in that** the turbine wheel (8) is arranged on the side of the pump wheel (7) facing the traction machine (2), as viewed in the axial direction with respect to the axis of rotation of the traction machine (2), or **in that** the pump wheel (7) is arranged on the side of the turbine wheel (8) facing the traction machine (2), as viewed in the axial direction with respect to the axis of rotation of the traction machine (2).

7. Drive device according to claim 3, **characterised in that** the ring gear shaft (26) is arranged coaxially to the differential gear output shaft and/or the guide wheel shaft (11).

## Revendications

1. Dispositif d'entraînement (1) pour un véhicule à moteur, présentant une machine de traction électrique (2), un convertisseur de couple (3), un engrenage multiplicateur (4) et un engrenage différentiel (5), la machine de traction (2) étant reliée, sur le plan de l'entraînement, dans l'ordre indiqué, à l'engrenage différentiel (5) par l'intermédiaire du convertisseur de couple (3) et de l'engrenage multiplicateur (4), la machine de traction (2) étant reliée, sur le plan de l'entraînement, au convertisseur de couple (3) soit par l'intermédiaire d'un engrenage droit (20), soit sans engrenage, l'engrenage multiplicateur (4) étant réalisé comme engrenage multiplicateur planétaire et comportant une roue solaire (22), une couronne (23) et au moins une roue planétaire (25) montée de manière rotative sur un porte-satellites (24) et en prise avec la roue solaire (22) et la couronne (23), la roue solaire (22) étant agencée, sur le plan de l'entraînement, du côté du convertisseur de couple (3) et le porte-satellites (24) étant agencé, sur le plan de l'entraînement, du côté de l'engrenage différentiel (5) et la couronne (23) étant fixée, **caractérisé en ce que** la couronne (23) est fixée par l'intermédiaire d'un arbre de couronne (26) agencé en chevauchement avec la machine de traction (2) dans la direction axiale par rapport à l'axe de rotation de la machine de traction (2).

2. Dispositif d'entraînement selon la revendication 1, **caractérisé en ce que** le convertisseur de couple (3) présente une roue de pompe (7) agencée, sur le plan de l'entraînement, du côté de la machine de traction (2), une roue de turbine (8) agencée, sur le plan de l'entraînement, du côté de l'engrenage différentiel (5) et une roue de guidage (9), la roue de guidage (9) étant agencée sur un arbre de roue de guidage (11).

3. Dispositif d'entraînement selon l'une des revendications précédentes, **caractérisé en ce que** l'arbre de roue de guidage (11) est reçu par un arbre d'entrée (14) du convertisseur de couple (3) réalisé sous forme d'arbre creux, ou **en ce que** l'arbre de roue de guidage (11) est réalisé sous forme d'arbre creux et reçoit un arbre de sortie (15) du convertisseur de couple (3) présent, sur le plan de l'entraînement, entre le convertisseur de couple (3) et l'engrenage multiplicateur (4), ou un arbre de sortie d'engrenage différentiel de l'engrenage différentiel (5).

4. Dispositif d'entraînement selon la revendication 3, **caractérisé en ce que** la machine de traction (2) est agencée coaxialement ou excentriquement par rapport à l'arbre de sortie (15).

5. Dispositif d'entraînement selon l'une des revendications précédentes, **caractérisé en ce qu'**un embrayage de pontage (13), vu dans la direction axiale par rapport à un axe de rotation de la machine de traction (2), est agencé entre la machine de traction (2) et le convertisseur de couple (3) ou sur un côté du convertisseur de couple (3) opposé à la machine de traction (2).

6. Dispositif d'entraînement selon la revendication 2, **caractérisé en ce que** la roue de turbine (8), vue dans la direction axiale par rapport à l'axe de rotation de la machine de traction (2), est agencée du côté de la roue de pompe (7) faisant face à la machine de traction (2), ou **en ce que** la roue de pompe (7), vue dans la direction axiale par rapport à l'axe de rotation de la machine de traction (2), est agencée du côté de la roue de turbine (8) faisant face à la machine de traction (2).

7. Dispositif d'entraînement selon la revendication 3, **caractérisé en ce que** l'arbre de couronne (26) est agencé coaxialement par rapport à l'arbre de sortie d'engrenage différentiel et/ou à l'arbre de roue de guidage (11).
